Europäisches Patentamt

(19) European Patent Office

Office européen des brevets

(11) Publication number: **0 234 325**
**A2**

# (12) EUROPEAN PATENT APPLICATION

(21) Application number: **87101250.6**

(22) Date of filing: **29.01.87**

(51) Int. Cl.³: **G 02 B 6/28**
**G 02 B 6/38**

(30) Priority: **24.02.86 US 832930**

(43) Date of publication of application:
**02.09.87 Bulletin 87/36**

(84) Designated Contracting States:
**DE FR GB IT NL SE**

(71) Applicant: **ALLIED CORPORATION**
**Columbia Road and Park Avenue P.O. Box 2245R (Law Dept.)**
**Morristown New Jersey 07960(US)**

(72) Inventor: **Corke, Michael**
**1865 Brentwood Lane**
**Wheaton Illinois 60187(US)**

(72) Inventor: **Kale, Billy Michael**
**30 Douglas Lane**
**Ridgefield Connecticut 06877(US)**

(72) Inventor: **Kopera, Paul Michael**
**10 Altoona Court**
**Vernon Hills Illinois 60061(US)**

(72) Inventor: **Sweeney, Kevin Lee**
**1695 Briarcliff Blvd., Apt. K**
**Wheaton Illinois 60182(US)**

(74) Representative: **Wagner, Karl H.**
**WAGNER & GEYER Patentanwälte**
**Gewuerzmuehlstrasse 5 Postfach 246**
**D-8000 München 22(DE)**

(54) Multimode optical fiber coupler and method of manufacture thereof.

(57) A multimode coupler in accordance with the invention comprises two multimode fibers fused together. A first taper leads to a unitary region of predetermined length. A second taper leads to a minimum diameter waist region at the center of the coupler. The method of manufacture involves heating the fibers and a ceramic member with a laser and scanning the fiber pair thereby to cause fusion thereof. Axial tension is applied selectively to result in the above-discussed construction.

Fig. 2

## MULTIMODE OPTICAL FIBER COUPLER
## AND METHOD OF MANUFACTURE THEREOF

This invention is related to the invention disclosed in copending concurrently filed application (Attorney Docket AN-85-005) of Michael Corke et al., which disclosure is specifically incorporated by reference herein.

### Background of the Invention

This invention relates to a multimode optical fiber coupler and to the method of manufacture thereof. More particularly, the invention relates to a coupler and method of manufacture wherein a laser heat source is employed in a scanning system to fuse two or more multimode fibers together in a predetermined manner to result in a multimode coupler which achieves approximate Gaussian mode distribution in each of the output fibers.

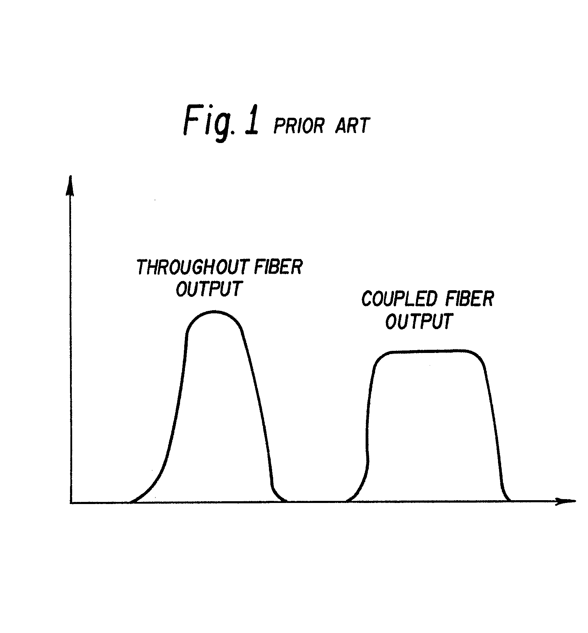

Most prior art couplers do not achieve this Gaussian distribution and instead achieve the distribution illustrated in Figure 1 wherein the central mode are not distributed uniformly between the two fibers.

Multimode fibers are typically glass fibers having a core diameter of at least 60 $\mu$ and typically about 50-990 $\mu$. Core and cladding together result in fiber diameter of about 125 $\mu$ -1 mm. These fibers, because of their size, are capable of carrying many modes of light, as is well known to those of ordinary skill in the art.

In the field of fiber optics, it is often necessary to provide devices known as couplers for purposes of communications. For definition purposes, an optical coupler is a device which shares light travelling down one fiber with at least one other fiber. In such devices it can be clearly appreciated that the less light lost in "coupling" within the coupler, the better the communications in a system employing such a coupler.

One prior art multimode coupler is disclosed in U.S. 4,291,940 to Kawasaki et al. The coupler disclosed therein comprises two multimode optic fibers, each having a biconical taper section. The biconical taper sections of the fibers are fused together to provide optical coupling between the fibers. In order to enhance mode mixing to achieve near Gaussian distribution in each fiber, the fibers are twisted around one another. Such a coupler is produced by twisting two optical fibers around one another, each having a biconical taper section created by heating and pulling, and heating the region of the twisted biconical taper sections to fuse the fibers together. Although claiming to approach near Gaussian mode distribution, tests have shown that the distribution achieved is like that of Figure 1.

An alternative construction for a coupler is disclosed in U.S. 4,449,781 to Lightstone et al. wherein the coupler comprises fused biconically tapered fibers which have first had their cladding reduced before progressing to a region where the fibers are tapered down in size, i.e., a biconical region where the fibers are fused together. Preferably, these fibers are also twisted about each other. The distribution achieved is like that of Kawasaki et al.

### Summary of the Invention

In accordance with one aspect of the invention, an improvement is provided in an optical fiber coupler made from at least two multimode fibers fused together into a coupling region to make a multimode coupler. The improvement resides in that beginning at each end thereof, the coupling region comprises a first portion where the fibers are fused together and taper down into a fused portion which is a unitary uniform size coupling zone of predetermined length. At the center of this unitary uniform size coupling zone of predetermined length, there is a second fused portion where the fibers taper down from the uniform coupling zone to meet at a minimum diameter waist of substantially circular cross-section containing both fiber cores passing therethrough.

In another aspect, the invention is directed to a method of making an optical fiber coupler made from at least two multimode fibers. The method comprises the steps of positioning predetermined portions of at least two multimode fibers together such that their claddings are in contact. A ceramic member is positioned in proximity to said predetermined portions and a laser light source is employed to cause direct heating of the fibers and ceramic member as well as indirect heating of the predetermined portions of the two fibers. The predetermined portions of the two fibers are moved in a reciprocal motion in proximity to a ceramic member at a rate sufficient to cause the predetermined portions of the fibers to fuse together. Axial tension is then applied to the fused region while continuing the reciprocal motion and heating to cause the fused portions to taper down from the individual fibers into a reduced diameter region of predetermined length wherein the fibers are fused into a unitary region. Thereafter, the reciprocal motion is terminated while continuing heating at the center of the unitary region as well as applying axial tension to cause the unitary region to taper at the center thereof into a waist portion of minimum diameter and substantially uniform and circular cross-section.

The apparatus employed to manufacture the coupler is generally like that of the copending application (Attorney Docket No. AN-85-005) and for the sake of brevity the details will not be discussed further herein.

During the manufacture of a coupler, light is constantly being transmitted through the fibers and monitored at the other end or output end. When predetermined distribution is achieved, heating and tensioning is stopped when measurements indicate that desired coupling is about to result. Once terminated, the fused fibers are allowed to cool to result in the manufactured coupler.

In preparing the fibers for manufacture into a coupler, the fibers are first stripped of a region of buffer layer at the center of the region of buffer layer, to leave only the fibers. The fibers are held together at the buffer regions at each end thereof using a gripper assembly spaced approximately one inch from each other such that at the portion where the buffer layers have been stripped, the fibers held are in cladding to cladding contact. The fibers are moved past a ceramic member in a reciprocal motion. The ceramic member is positioned underneath the fibers and the fibers and the ceramic member are heated by a laser beam directed onto both the fibers and the ceramic member.

Having briefly described the invention, these and other features and advantages of this invention will become more readily apparent from the following detailed description. The description is to be read in conjunction with the accompanying drawings.

## Brief Description of the Drawings

Figure 1 is a graph illustrating mode distribution in typical prior art multimode couplers.

Figure 2 is a schematic side illustration of a multimode coupler in accordance with the invention.

Figures 3a-3c show cross-sectional views of the coupler of Figure 2, respectively, along lines AA, BB, and CC.

Figure 4 is a schematic illustration of a typical device for manufacturing the coupler of the invention.

Figures 5a-5c show schematically three steps employed in manufacturing the coupler in accordance with the invention.

Figure 6a-6d show various alternative constructions of the ceramic member employed in the invention.

Figure 7 show a graph of the mode distribution achieved with the coupler of the invention.

## Detailed Discussion of the Invention

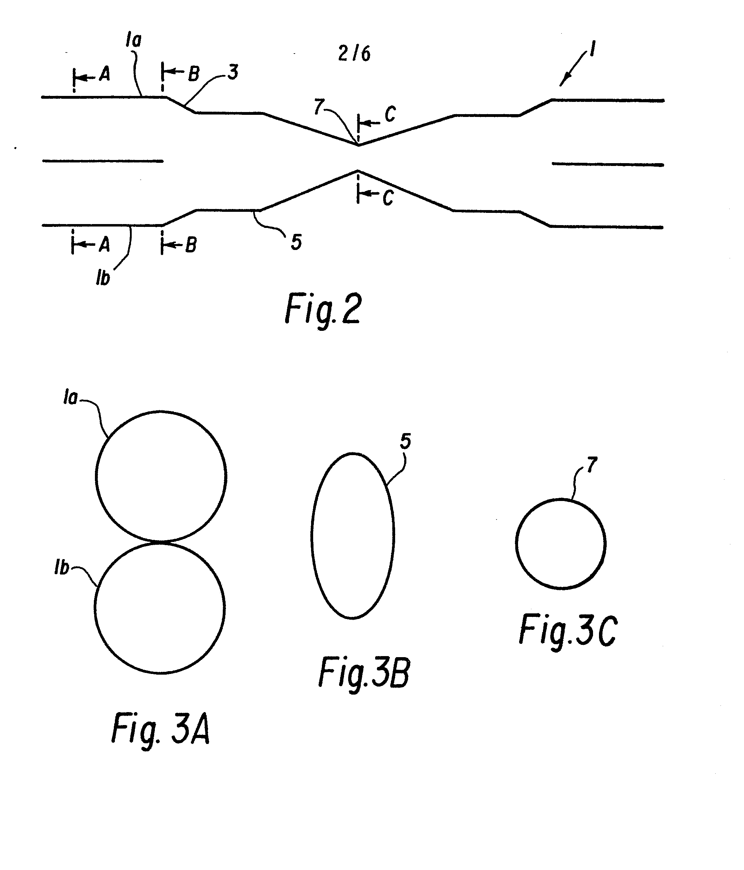

The multimode coupler in accordance with the invention is generally illustrated in Figure 2. As can be seen therein, the coupler consists of a fiber pair 1 which includes fibers 1a and 1b. These fibers are

0234325

multimode fibers of the type well known to those of ordinary skill in the art. The fibers are fused together, as will be discussed hereinafter, in a manner such that they taper down at a tapered portion 3 into a unitary fusion zone 5 of predetermined length wherein the cross-section, as shown in Figures 3a-3c, is such that one can no longer identify the discrete fiber elements. Instead, as shown in Figure 3b, the unitary fusion zone 5 appears to be a discrete entity of predetermined length and generally ellipse cross-section to circular cross-section. From this region, an additional tapered zone terminates at a waist 7 of minimum diameter, which as shown in Figures 3c is preferably of substantially circular cross-section.

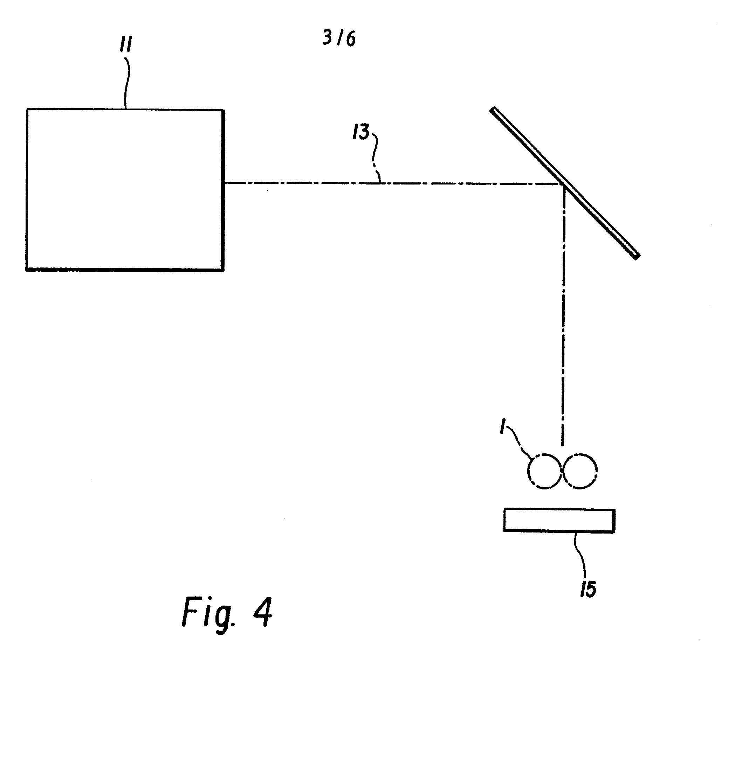

A preferred arrangement of a device for manufacturing the coupler is generally illustrated in Figure 4. Typically, a laser 11 directs a laser beam 13 onto a mirror wherefrom it is reflected onto both the fiber pair 1 to directly heat the fiber pair 1 and onto pair 1 a ceramic member 15 to heat the ceramic member 15 and indirectly heat the fiber.

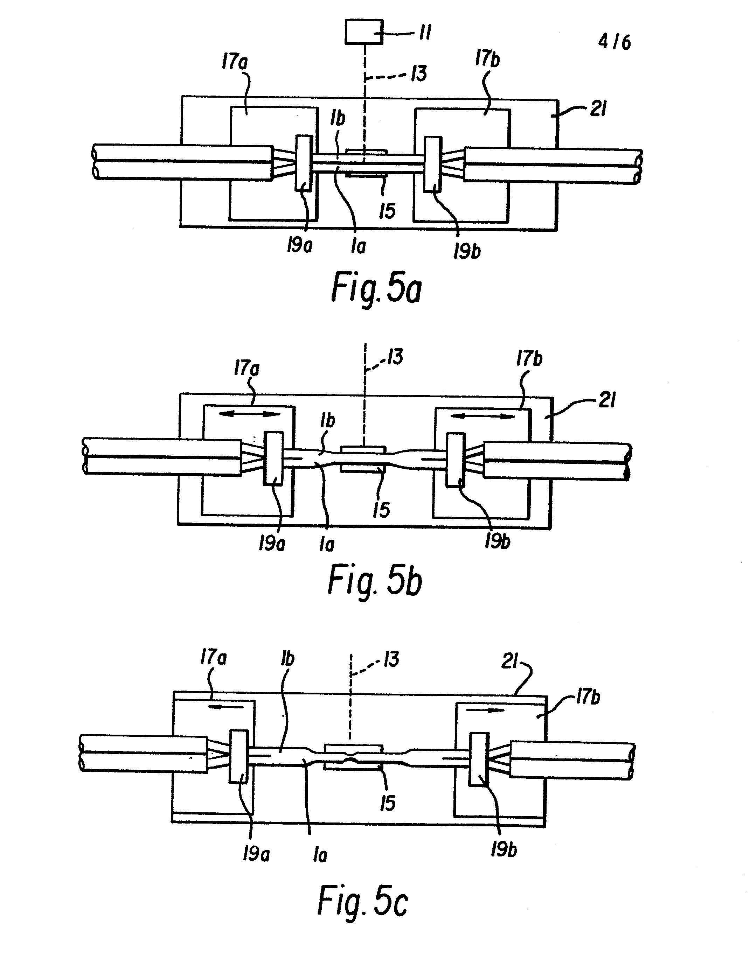

The method of manufacturing the coupler is generally illustrated in Figures 5a-5c. In a first step of the method, two multimode fibers 1a and 1b are placed adjacent each other with the portions to be fused together having the buffer layers thereof removed as shown. The fibers are held together at the ends of the to be fused region by grippers 19. A laser 11, as discussed in copending application, is preferably a $CO_2$ laser of the type commercially available from Apollo Lasers Company as the Model 580 which operates at 80 watts maximum power, and typically in the 30-40 watt range directs a laser beam 13 to directly heat both the fibers and a ceramic member 15 located in proximity to and at a predetermined spacing from the fiber pair 1a and 1b, which ceramic member in turn also indirectly heats the fibers 1a and 1b. In this regard, it is noted that the diameter of the beam is larger than that of the two fibers together. Grippers 19 mounted individually on blocks 17a and 17b hold the fibers together and the blocks 17a and 17b are reciprocated on a support 21 in a back and forth motion and at the same speed to cause an effective scan of the fibers past the heated ceramic member 15. This heating causes the fibers to fuse together.

As shown in Figure 5b, once the fibers have fused together over the fusion zone, the grippers 19 are then caused to move at different speeds with respect to each other by the varying the speed of moving blocks 17a and 17b, as will be readily apparent to those of ordinary skill in the art, to cause axial tensions at a predetermined rate of relative separation between blocks 17a and 17b to be applied to the fibers, and thereby cause the fused fiber region to taper into a uniform or unitary structure zone of smaller size than the two fibers together i.e., region 5. Once a predetermined length of region 5 has been reached, the scanning movement of the blocks 17a and 17b is stopped, and as shown in Figure 3c axial tensions are still applied by outward movement of the blocks 17a and 17b, and consequently of the grippers 19, to cause an additional taper into a waist 7 of minimum diameter. This is continued and the process is monitored during fusing by transmitting light into one fiber and measuring the output at both fibers at the other end. At a point when measured output indicates desired coupling is approached, the process is terminated and the fiber coupler allowed to cool.

Although various multimode fiber types can be employed, preferably commercially available graded index type fiber of 100 µ core diameter and 140 µ outer diameter is employed. Preferably, the operating conditions are adjusted such that the resultant coupler has unitary regions each of about 6-20 mm in length. The tapered region including the waist is preferably 2-10 mm in length.

Although it has been stated that the fibers are moved to achieve the scanning effect, it will be appreciated that the same effect can be achieved by scanning the laser.

Having described the invention, the following example details the operating conditions and parameters employed in manufacturing one coupler in accordance with the invention.

Table

| Cycle | mm Scan Motor Distance | mm Draw Motor Distance | mm/sec Scan Vel. | mm/sec Draw Vel. | $CO_2$ Laser Power (ceramic detector luminescence voltage) | Individual Cycle Run Time (sec) |
|---|---|---|---|---|---|---|
| 1 | 0.000 | 0.000 | 0.400 | 0.110 | 0.00 | 12.000 |
| 2 | -2.500 | 0.000 | 0.400 | 0.110 | 0.00 | 6.650 |
| 3 | 2.400 | 0.000 | 0.400 | 0.110 | 0.60 | 12.650 |
| 4 | -2.400 | 0.000 | 0.400 | 0.110 | 0.90 | 12.400 |
| 5 | 2.400 | 0.000 | 0.400 | 0.110 | 1.40 | 12.400 |
| 6 | -2.700 | 0.000 | 0.400 | 0.110 | 1.80 | 13.150 |
| 7 | 2.700 | 0.000 | 0.400 | 0.110 | 2.40 | 13.900 |
| 8 | -2.400 | 0.000 | 0.400 | 0.110 | 3.20 | 13.150 |
| 9 | 2.100 | 0.000 | 0.400 | 0.110 | 3.50 | 11.650 |
| 10 | -1.800 | 0.000 | 0.400 | 0.110 | 3.65 | 10.150 |
| 11 | 2.050 | 0.750 | 0.350 | 0.068 | 3.62 | 11.400 |
| 12 | -1.300 | 1.750 | 0.218 | 0.065 | 3.64 | 15.785 |
| 13 | 3.550 | 2.750 | 0.315 | 0.065 | 3.65 | 15.785 |
| 14 | -0.800 | 3.750 | 0.283 | 0.065 | 3.65 | 15.785 |
| 15 | 5.050 | 4.750 | 0.357 | 0.061 | 3.65 | 16.793 |
| 16 | -0.300 | 5.750 | 0.321 | 0.060 | 3.70 | 17.067 |
| 17 | 6.550 | 6.750 | 0.281 | 0.041 | 3.70 | 24.790 |

0234325

Table (continued)

| Cycle | mm<br>Scan<br>Motor<br>Distance | mm<br>Draw<br>Motor<br>Distance | mm/sec<br>Scan<br>Vel. | mm/sec<br>Draw<br>Vel. | $CO_2$<br>Laser<br>Power<br>(ceramic<br>detector<br>luminescence<br>voltage) | Individual<br>Cycle Run<br>Time (sec) |
|---|---|---|---|---|---|---|
| 18 | 0.200 | 7.750 | 0.267 | 0.042 | 3.70 | 24.210 |
| 19 | 8.050 | 8.750 | 0.314 | 0.040 | 3.65 | 25.400 |
| 20 | 0.700 | 9.750 | 0.294 | 0.040 | 3.70 | 25.400 |
| 21 | 9.800 | 11.000 | 0.319 | 0.035 | 3.70 | 28.971 |
| 22 | 1.200 | 12.250 | 0.301 | 0.035 | 3.70 | 28.971 |
| 23 | 6.125 | 12.250 | 0.400 | 0.042 | 3.70 | 13.313 |
| 24 | 6.325 | 12.650 | 0.020 | 0.040 | 3.70 | 11.000 |
| 25 | 6.525 | 13.050 | 0.020 | 0.040 | 3.70 | 11.000 |
| 26 | 6.725 | 13.450 | 0.020 | 0.040 | 3.70 | 11.000 |
| 27 | 6.925 | 13.850 | 0.020 | 0.040 | 3.70 | 11.000 |
| 28 | 7.125 | 14.250 | 0.020 | 0.040 | 3.70 | 11.000 |
| 29 | 7.325 | 14.650 | 0.020 | 0.040 | 3.70 | 11.000 |
| 30 | 7.525 | 15.050 | 0.020 | 0.040 | 3.70 | 11.000 |
| 31 | 7.725 | 15.450 | 0.020 | 0.040 | 3.70 | 11.000 |
| 32 | 7.925 | 15.850 | 0.020 | 0.040 | 3.70 | 11.000 |
| 33 | 8.125 | 16.250 | 0.020 | 0.040 | 3.70 | 11.000 |
| 34 | 8.325 | 16.650 | 0.020 | 0.040 | 3.70 | 11.000 |
| 35 | 8.525 | 17.050 | 0.020 | 0.040 | 3.70 | 11.000 |
| 36 | 8.725 | 17.450 | 0.020 | 0.040 | 3.70 | 11.000 |
| 37 | 8.925 | 17.850 | 0.020 | 0.040 | 3.70 | 11.000 |
| 38 | 9.125 | 18.250 | 0.020 | 0.040 | 3.70 | 11.000 |
| 39 | 9.325 | 18.650 | 0.020 | 0.040 | 3.70 | 11.000 |
| 40 | 9.525 | 19.050 | 0.020 | 0.040 | 3.70 | 11.000 |

Table (continued)

| Cycle | mm Scan Motor Distance | mm Draw Motor Distance | mm/sec Scan Vel. | mm/sec Draw Vel. | $CO_2$ Laser Power (ceramic detector luminescence voltage) | Individual Cycle Run Time (sec) |
|---|---|---|---|---|---|---|
| 41 | 9.725 | 19.450 | 0.020 | 0.040 | 3.70 | 11.000 |
| 42 | 9.925 | 19.850 | 0.020 | 0.040 | 3.70 | 11.000 |
| 43 | 10.125 | 20.250 | 0.020 | 0.040 | 3.70 | 11.000 |
| 44 | 10.325 | 20.650 | 0.020 | 0.040 | 3.70 | 11.000 |

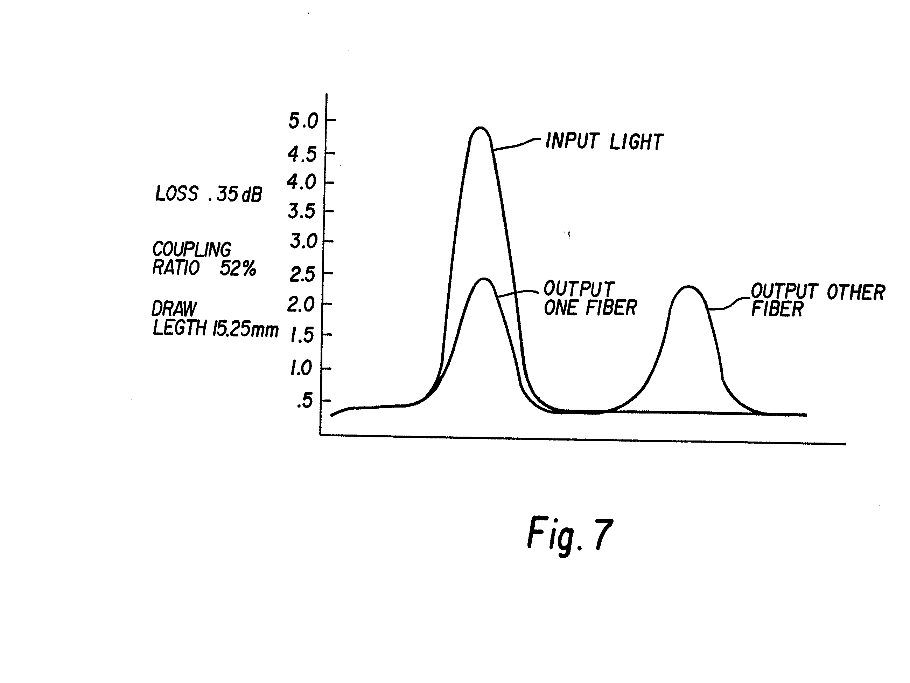

If nearly Gaussian distribution is desired, the manufacturing process will also include transmitting light into one of the fibers during fusing and drawing. The output is monitored for each fiber at the output end by a conventional light sensor. If nearly Gaussian distribution is desired, the process will be terminated when the light output is as shown in Figure 7.

The manufacturing process itself can be computer controlled in a manner which will be readily apparent to those of ordinary skill in the art. The temperature at the ceramic member can be monitored by a conventional silicon detector whose output voltage representative of ceramic member luminescence is measured during heating. Depending on measured output, the laser power is adjusted to cause the measured output from the sensor to fall within predetermined ranges.

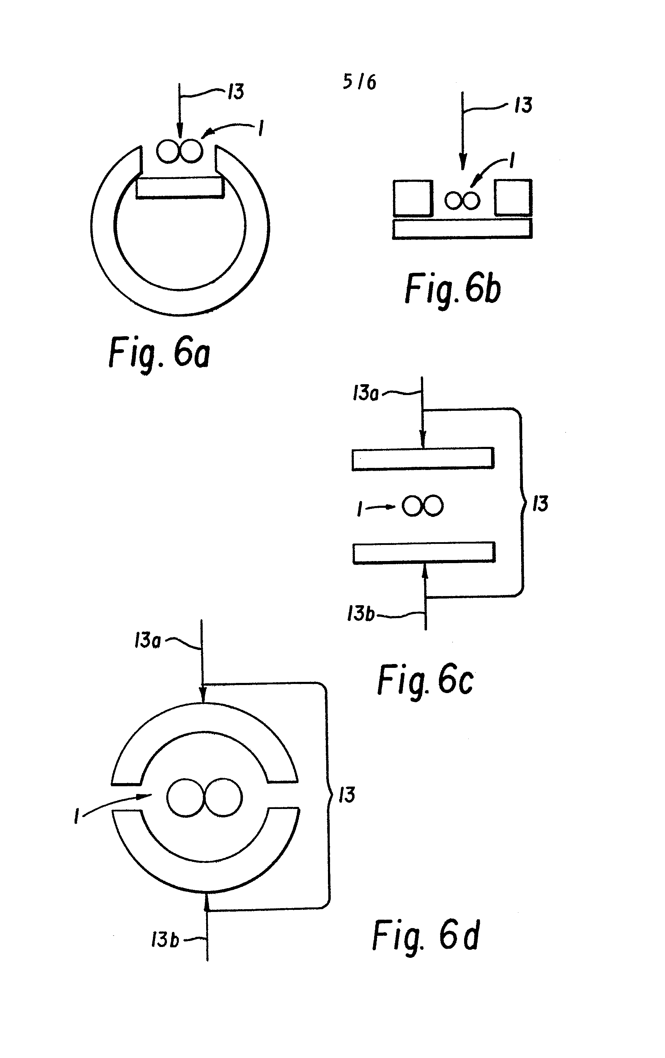

Although the ceramic member 15 has been generally shown as a flat member, alternative constructions can be employed as shown in Figures 6a-6d to achieve more uniform heating. Some constructions involve a two-part member, the preferred construction being that of Figure 6a whereby a uniform heating oven effect is created. In one embodiment as in Figure 6d, the laser beam 13 does not impinge on the fiber pair 1. Furthermore, two laser beams 13a and 13b can be employed.

Still further, although the invention has been described with reference to two fibers, it will be appreciated that three, four or more fibers can be assembled into a coupler by practicing the method of the invention.

The foregoing description has set forth details of a preferred form of multimode fiber coupler in accordance with the invention. Variations and alternative forms and all such changes and modifications as will be apparent to those of ordinary skill in the art, and which fall within the scope of the claims, are intended to be encompassed herein.

What is claimed is:

1. In an optical fiber coupler made from at least two multimode fibers fused together into a coupling region, the improvement wherein beginning at each end thereof the coupling region comprises a first portion where the fibers are fused together and taper down into a fused portion which is a unitary uniform size coupling zone of predetermined length, and a second fused portion where the fibers taper down from said uniform coupling zone to meet at a minimum diameter waist of substantially circular cross-section containing both fiber cores passing therethrough.

2. A coupler as in claim 1 wherein the length of each of the fused unitary regions is about 10-20 mm.

3. A coupler as in claim 1 wherein the total length of the fused region is about 6-20 mm.

4. A coupler as in claim 1 wherein the length of the waist containing tapered region is about 2-10 mm.

5. A method of making an optical fiber coupler made from at least two multimode fibers, the method comprising the steps of:

positioning predetermined portions of at least two multimode fibers together such that their claddings are in contact;

heating both the fibers and a ceramic member with a laser source to cause direct and indirect heating of said predetermined portions of said at least two fibers;

moving said predetermined portions of said fibers or said laser source in a reciprocal motion in proximity to said ceramic member at a rate sufficient to cause said predetermined portions of said fibers to fuse together;

applying axial tension to said fused region while continuing said reciprocal motion and heating to cause said fused region to taper down from said individual fibers into a reduced diameter region of predetermined length wherein the fibers are fused into a unitary region; and

terminating said reciprocal motion while continuing said heating and application of tension to cause said unitary region to taper at the center thereof into a waist portion of minimum diameter and substantially uniform cross-section.

6. A method as in claim 5 wherein said ceramic member is a two-part member, one part being of circular cross-section and open at the top, and the other part being flat and located within the one part wherein heating of the fibers occurs by heat radiation from substantially all directions around the fibers.

7. A method as in claim 5 wherein the axial tension applied to said fused region is sufficient to cause the unitary fiber region to stretch without breaking.

8. A method as in claim 5 wherein the power of said laser source is controlled to fall within pre-determined values.

# Fig. 1 PRIOR ART

THROUGHOUT FIBER
OUTPUT

COUPLED FIBER
OUTPUT

Ia

├─ A ─┤    ├─ B

├─ A ─┤    ├─ B

3

7    ├─ C

C ─┤

5

Ib

**Fig.2**

Ia

Ib

5

7

**Fig.3A**

**Fig.3B**

**Fig.3C**

Fig. 4

Fig. 5a

Fig. 5b

Fig. 5c

Fig. 6a

Fig. 6b

Fig. 6c

Fig. 6d

Fig. 7

0234325